# EUROPEAN PATENT SPECIFICATION

(11) **EP 3 001 728 B1**
(45) Date of publication and mention of the grant of the patent: **09.08.2017**
(21) Application number: 13887298.1
(22) Date of filing: 21.06.2013
(51) Int. Cl.: H04W 8/06, H04W 88/14, H04W 92/04, H04W 36/00

(54) **METHOD, APPARATUS AND COMPUTER PROGRAM PRODUCT FOR SELECTING MOBILITY MANAGEMENT ENTITY**
VERFAHREN, VORRICHTUNG UND COMPUTERPROGRAMMPRODUKT ZUR AUSWAHL EINER MOBILITÄTSVERWALTUNGSEINHEIT
PROCÉDÉ, DISPOSITIF ET PRODUIT PROGRAMME D'ORDINATEUR POUR LA SÉLECTION D'UNE ENTITÉ DE GESTION DE LA MOBILITÉ

(43) Date of publication of application: 30.03.2016
(73) Proprietor: Huawei Technologies Co., Ltd., Longgang District Shenzhen, Guangdong 518129 (CN)
(72) Inventor: DENG, Lei, Shenzhen Guangdong 518129 (CN)
(74) Representative: Thun, Clemens
(86) International application number: PCT/CN2013/077665
(87) International publication number: WO 2014/201692

(56) References cited:
- WO-A1-2010/003452
- WO-A1-2010/057198
- CN-A- 101 605 316
- CN-A- 102 123 464
- CN-A- 102 651 893
- US-A1- 2010 080 186
- US-A1- 2011 235 505
- US-A1- 2012 023 360
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 11)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.5.0, 15 March 2013 (2013-03-15), pages 1-209, XP050692265,
- "3rd Generation Partnership Project; Technical Specification Group Services and System Aspects; General Packet Radio Service (GPRS) enhancements for Evolved Universal Terrestrial Radio Access Network (E-UTRAN) access (Release 11)", 3GPP STANDARD; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V11.5.0, 5 March 2013 (2013-03-05), pages 1-286, XP050691825,
- "3rd Generation Partnership Project; Technical Specification Group Radio Access Network; Evolved Universal Terrestrial Radio Access Network (E-UTRAN); S1 Application Protocol (S1AP) (Release 11)", 3GPP STANDARD; 3GPP TS 36.413, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V11.3.0, 15 March 2013 (2013-03-15), pages 1-274, XP050692274,
- "3rd Generation Partnership Project; Technical Specification Group Core Network and Terminals; 3GPP System Architecture Evolution; CT WG1 Aspects (Release 8)", 3GPP STANDARD; 3GPP TR 24.801, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.1.0, 1 December 2008 (2008-12-01), pages 1-215, XP050365687,
- "3rd Generation Partnership Project; Technical Specification Group Core Network and Terminals; 3GPP Evolved Packet System: CT WG4 Aspects (Stage3); Release 8", 3GPP STANDARD; 3GPP TR 29.803, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.9.0, 1 June 2008 (2008-06-01), pages 1-150, XP050373102,

## Description

### TECHNICAL FIELD

Embodiments of the present invention relate to the field of communications technologies, and in particular, to a method, an apparatus, and a system for selecting a mobility management entity.

### BACKGROUND

To meet challenges of wireless broadband technologies and keep the leading edge of the 3^{rd} Generation Partnership Project (The 3rd generation partnership project, 3GPP) network, the 3GPP has developed a Long Term Evolution (long term evolution, LTE) program of a mobile communications network. Under guidance of the LTE program, a new mobile communications network architecture, that is, a Long Term Evolution/System Architecture Evolution (Long Term Evolution/System Architecture Evolution, LTE/SAE) network system architecture, is defined.

In an LTE/SAE network, an evolved NodeB (evolved NodeB, eNB) (also called an evolved base station) may create S1-MME connections to multiple mobility management entities (mobility management entity, MME), and the multiple MMEs form an MME pool (MME pool). When user equipment (user equipment, UE) accesses the network from the eNB, the eNB selects an MME that serves the UE, and creates a dedicated S1-MME connection.

Currently, when the eNB is connected to multiple MMEs, a stipulation about the selection, performed by the eNB, of an MME is as follows: First, selecting the MME according to identification information carried in information reported by the user equipment (user equipment, UE), for example, selecting the MME according to an SAE-temporary mobile subscriber identity (SAE-temporary mobile subscriber identity, S-TMSI) or according to a globally unique MME identity (globally unique MME identity, GUMMEI) and a selected public land mobile network (public land mobile network, PLMN). If an MME corresponding to the identification information carried in the information reported by the UE cannot be selected for the UE due to MME overload or an S1 link fault, the MME is selected according to a load condition of the MMEs.

Currently, manners of selecting an MME are not flexible enough, and sometimes can hardly meet operator requirements, which is adverse to network management.

US 2010/080186 A1 discloses a MME pool 1 and MME pool 2 (see MP1 and MP2 in FIG. 5 of D1), ENB 2 and ENB 3 are overlapping parts of the MP1 and MP 2. As a location of the ENB2 is close to the MP1, the MP1 is defined as a primary pool of the ENB2, and the MP 2 is defined as a neighboring pool of the ENB2. Similarly, the MP2 is defined as a primary pool of the ENB3, and the MP1 is defined as a neighboring pool of the ENB3. The ENBs in each overlapping part are configured with a primary pool and neighboring pools, and/or a priority list of pools. When a UE accesses an ENB in the overlapping part, and when a new MME needs to be selected, the ENB selects a primary pool or a pool with the highest priority from preset information; and selects an MME from the primary MME poor or the MME pool with the highest priority according to capability information and/or load balance information.

WO 2010/057198 A1 discloses that radio resource control (RRC) setup messaging is exchanged between UE and eNB, and the eNB selects an MME based on the relative MME capacity information.

US 2011/235505 A1 discloses a method to provide stateful geographic redundancy for the LTE MME (Mobility Management Entity) function of the 3GPP E-UTRAN Evolved Packet core (EPC). The method provides MME many-to-one ("n:1") stateful redundancy by building upon the S1-Flex architecture, which enables a MME Pool Area to be defined as an area within which a UE (User Equipment) may be served without need to change the serving MME. Geographic redundancy is achieved by utilizing a standby MME node deployed to backup a pool of MME nodes, with the standby MME node designed to handle the large volume of journaling or synchronization messages from all the MME nodes in the pool. The standby MME node takes over the personality and responsibility of any MME node in the pool that has failed, with minimal impact to subscribers that were being served by that failed MME node.

US 2012/023360 A1 discloses a method, performed by a first mobility management entity (MME) device in a network. The method includes receiving, from a second MME device, standby database information associated with user equipment (UE) registered with the second MME device; detecting that the second MME device has failed or lost connectivity; designating that the UEs registered with the second MME device will be registered with the first MME device, in response to detecting that the second MME device has failed or lost connectivity; detecting a request to activate a particular UE registered with the second MME device; and paging the particular UE to register with the first MME device, using the standby database information and in response to detecting the request to activate the particular UE.

### SUMMARY

The invention is defined in the independent claims. Embodiments of the invention are defined in the dependent claims. In view of that, the present invention provides a method, an apparatus, and a computer program product for selecting an MME to improve flexibility of network management.

A first aspect provides a method for selecting a mobility management entity (MME), including: receiving, by a base station, a radio resource control (RRC) connection request of user equipment; acquiring, by the base station, priority information of multiple MMEs connected to the base station; and selecting, by the base station, a serving MME for the user equipment from the multiple MMEs according to the acquired priority information when the RRC connection request does not carry MME information, or, when the RRC connection request carries MME information and an MME indicated by the MME information cannot be selected for the user equipment due to overload of the MME or a fault of an S1 link, where:
the base station is connected to a local MME pool and a backup MME pool, the backup MME pool provides a backup for the local MME pool, and the multiple MMEs comprise MMEs in the local MME pool and MMEs in the backup MME pool;
a priority of a highest-priority MME in the local MME pool is higher than a priority of a highest-priority MME in the backup MME pool; or priorities of the MMEs in the local MME pool are all higher than priorities of the MMEs in the back MME pool; and
the base station select the serving MME for the user equipment in the local MME pool first when an available MME exists in the local MME pool.

With reference to the first aspect, in a first possible implementation manner of the first aspect, the selecting, by the base station, a serving MME for the user equipment from the multiple MMEs according to the acquired priority information, complies with the following principles: selecting an MME for the user equipment from a highest-priority MME pool first, where a priority of each MME pool is a priority of a highest-priority MME in the MME pool; and selecting, when no MME is available in the highest-priority MME pool, an MME from a second-highest-priority MME pool.

With reference to the first possible implementation manner of the first aspect, in a second possible implementation manner of the first aspect, the selecting, by the base station, a serving MME for the user equipment from the multiple MMEs according to the acquired priority information, further complies with the following principle: selecting a highest-priority MME first in an MME pool.

With reference to the first or second possible implementation manner of the first aspect, in a third possible implementation manner of the first aspect, the selecting, by the base station, a serving MME for the user equipment from the multiple MMEs according to the acquired priority information, further complies with the following principle: selecting, when multiple MMEs have a same priority, an MME for the user equipment from the multiple MMEs having the same priority according to capacities and loads of the MMEs.

With reference to the first aspect or one of the first to third possible implementation manners of the first aspect, in a fourth possible implementation manner of the first aspect, the selecting, by the base station, a serving MME for the user equipment from the multiple MMEs according to the acquired priority information, includes: determining, by the base station, a first MME with a highest priority in the multiple MMEs; determining, by the base station, a first MME pool that includes the first MME, where the first MME pool is the local MME pool; selecting, by the base station when the first MME pool includes available MMEs, the serving MME for the user equipment from the available MMEs in the first MME pool; or selecting, by the base station when the first MME pool includes no available MME, the serving MME for the user equipment from an MME pool except the first MME pool.

With reference to the first aspect or one of the first to third possible implementation manners of the first aspect, in a fifth possible implementation manner of the first aspect, the selecting, by the base station, a serving MME for the user equipment from the multiple MMEs according to the acquired priority information, includes: determining, by the base station, a first MME with a highest priority in the multiple MMEs; selecting, by the base station when the first MME is available, the first MME as the serving MME; or selecting, by the base station when the first MME is unavailable and a first MME pool that includes the first MME includes available MMEs, the serving MME for the user equipment from the available MMEs in the first MME pool; or selecting, by the base station when the first MME is unavailable and a first MME pool that includes the first MME includes no available MME, the serving MME for the user equipment from an MME pool except the first MME pool, where the first MME pool is the local MME pool.

A second aspect provides a base station, including: a receiving unit, configured to receive a radio resource control (RRC) connection request of user equipment; an acquiring unit, configured to acquire priority information of multiple MMEs connected to the base station; and a selecting unit, configured to select a serving MME for the user equipment from the multiple MMEs according to the priority information acquired by the acquiring unit when the RRC connection request does not carry MME information, or, when the RRC connection request carries MME information and an MME indicated by the MME information cannot be selected for the user equipment due to overload of the MME or a fault of an S1 link, wherein:
the base station is connected to a local MME pool and a backup MME pool, the backup MME pool provides a backup for the local MME pool, and the multiple MMEs comprise MMEs in the local MME pool and MMEs in the backup MME pool;
a priority of a highest-priority MME in the local MME pool is higher than a priority of a highest-priority MME in the backup MME pool; or priorities of the MMEs in the local MME pool are all higher than priorities of the MMEs in the backup MME pool; and
the selecting unit is configured to select the serving MME for the user equipment in the local MME pool first when an available MME exists in the local MME pool.

With reference to the second aspect, in a first possible implementation manner of the second aspect, when selecting the serving MME for the user equipment from the multiple MMEs according to the acquired priority information, the selecting unit complies with the following principles: selecting an MME for the user equipment from a highest-priority MME pool first, where a priority of each MME pool is a priority of a highest-priority MME in the MME pool; and selecting, when no MME is available in the highest-priority MME pool, an MME from a second-highest-priority MME pool.

With reference to the first possible implementation manner of the second aspect, in a second possible implementation manner of the second aspect, when selecting the serving MME for the user equipment from the multiple MMEs according to the acquired priority information, the selecting unit further complies with the following principle: selecting a highest-priority MME first in an

With reference to the first or second possible implementation manner of the second aspect, in a third possible implementation manner of the second aspect, when selecting the serving MME for the user equipment from the multiple MMEs according to the acquired priority information, the selecting unit further complies with the following principle: selecting, when multiple MMEs have a same priority, an MME for the user equipment from the multiple MMEs having the same priority according to capacities and loads of the MMEs.

With reference to the second aspect or one of the first to third possible implementation manners of the second aspect, in a fourth possible implementation manner of the second aspect, the base station further includes: a determining unit, configured to determine a first MME with a highest priority in the multiple MMEs, and determine a first MME pool that includes the first MME, where the first MME pool is the local MME pool, and the selecting unit is configured to select, when the first MME pool includes available MMEs, the serving MME for the user equipment from the available MMEs in the first MME pool; or select, when the first MME pool includes no available MME, the serving MME for the user equipment from an MME pool except the first MME pool.

With reference to the second aspect or one of the first to third possible implementation manners of the second aspect, in a fifth possible implementation manner of the second aspect, the base station further includes: a determining unit, configured to determine a first MME with a highest priority in the multiple MMEs, where the selecting unit is configured to select, when the first MME is available, the first MME as the serving MME; or select, when the first MME is unavailable and a first MME pool that includes the first MME includes available MMEs, the serving MME for the user equipment from the available MMEs in the first MME pool; or select, when the first MME is unavailable and a first MME pool that includes the first MME includes no available MME, the serving MME for the user equipment from an MME pool except the first MME pool, where the first MME pool is the local MME pool.

A third aspect provides a computer program product, including a computer-readable medium, where the computer-readable medium includes a set of program codes used to implement a method described in the first aspect or in any implementation manner of the first aspect.

It can be seen that in the method, apparatus, and computer program product, an eNB selects an MME according to the priorities of MMEs, the priorities of the MMEs can be pre-configured, and, at the time of configuring, requirements in different scenarios can be considered and different priorities can be configured for different MMEs, and therefore, the base station's selecting the MME is more compliant with the requirements in different scenarios, and flexibility of network management is improved.

### BRIEF DESCRIPTION OF DRAWINGS

To describe the technical solutions in the embodiments of the present invention more clearly, the following briefly introduces the accompanying drawings required for describing the embodiments.
FIG. 1 is a schematic flowchart of a method for selecting an MME according to an embodiment of the present invention;
FIG. 2 is a schematic structural diagram of a network according to an embodiment of the present invention;
FIG. 3 is a schematic flowchart of a method for selecting an MME according to another embodiment of the present invention;
FIG. 4 is a schematic flowchart of a method for selecting an MME according to still another embodiment of the present invention;
FIG. 5 is a schematic structural diagram of a base station according to an embodiment of the present invention;
FIG. 6 is a schematic structural diagram of another base station according to an embodiment of the present invention; and
FIG. 7 is a schematic structural diagram of still another base station according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention.

This application sufficiently considers operator requirements in different scenarios, and priorities are configured for MMEs. Therefore, an eNB can select an MME according to the priorities of the MMEs. Because the priorities can be pre-configured according to the operator requirements, the selected MME is more compliant with the operator requirements, and flexibility of network management is improved. In addition, such a policy of configuring a priority may be combined with an existing MME selection policy to make MME selection more flexible.

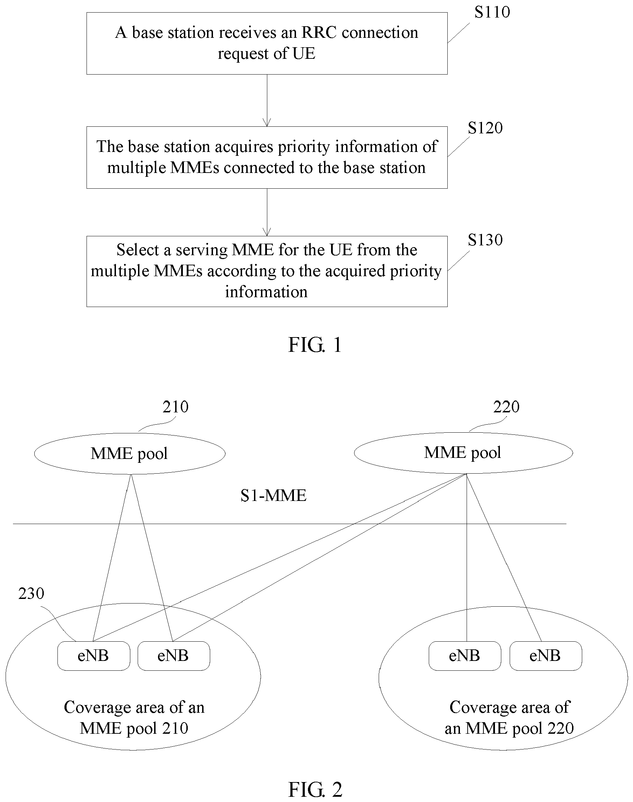

See FIG. 1. FIG. 1 is a schematic flowchart of a method for selecting an MME according to an embodiment of the present invention. When a base station receives a radio resource control (RRC) connection request of UE (S110), the base station needs to select an MME for the UE. A process of selecting the MME may include steps shown in FIG. 1:
S120. The base station acquires priority information of multiple MMEs connected to the base station.
S130. Select a serving MME for the UE from the multiple MMEs according to the acquired priority information.

It should be noted that the order between the steps S110 and S120 is not limited. The base station may acquire the priority information of the MMEs connected to the base station after receiving the RRC connection request, or acquire the priority information beforehand. After receiving the RRC connection request, the base station selects an MME according to the information, and in this case, the acquiring may be understood as acquiring from a local directory.

The RRC connection request includes any signaling of creating an RRC connection between the UE and the base station, for example, signaling such as an attach (attach) request, and tracking area update (tracking area update, TAU). When such signaling carries MME information, an MME may be selected for the UE according to the carried MME information. When the RRC connection request does not carry the MME information, an MME is selected for the UE according to the foregoing method, that is, according to a priority. In addition, although the RRC connection request carries the MME information, if the MME indicated by the MME information carried in the signaling of the UE cannot be selected for the UE due to overload of the corresponding MME or a fault of an S1 link, the MME may also be selected for the UE by using the foregoing method.

In addition, the priorities of the MMEs are pre-configured, and, when configuring the priorities, requirements in different scenarios can be considered and different priorities can be configured for different MMEs, and therefore, the MME selected by the base station is more compliant with the requirements in different scenarios, and flexibility of network management is improved. In addition, the priorities of the MMEs may be configured by a network management device as required, and therefore, the configuration of the priorities can be adjusted in time according to the requirements in different scenarios, which further improves the flexibility of network management. Moreover, the pre-configured priority information may be stored on an MME side, and the base station may obtain the priority information by interacting with the MMEs and select an MME according to the priority information.

In addition, this application does not limit the form of the priority information so long as the priority information can be used to distinguish between different priority levels. For example, a simple implementation manner is: using value information to reflect the priority levels. For example, eight priority levels are selected, and are denoted by values 1 to 8 separately. A larger value represents a higher priority level. Certainly, it is also appropriate that a smaller value represents a higher priority level, which is not limited in this embodiment. When a priority is configured, different priority values are configured for MMEs according to requirements in different scenarios or policy requirements of the operator. Therefore, during MME selection, a higher-priority or lower-priority MME may be selected first according to the priority value information.

The following describes implementation manners and effects of this application in detail by using requirements in a scenario that a backup MME pool exists as an example. However, this scenario is merely an example, and is not intended to limit this application. According to hints in the following embodiments, persons skilled in the art may apply this application to other scenarios to meet the requirements in different scenarios and enhance flexibility of network management.

Currently, to improve network reliability, backup may be performed between MME pools in different geographic locations, and therefore, an eNB in a specific MME pool may be not only connected to a local MME pool, but also connected to a backup MME pool. For example, in networking shown in FIG. 2, an MME pool 220 provides a backup for an MME pool 210; and the MME pool 210 may also provide a backup for the MME pool 220, or another MME pool provides a backup for the MME pool 220. An eNB 230 in a coverage area of the MME pool 210 is not only connected to the MME pool 210, but may also be connected to the MME pool 220. For UE under the eNB 230, the MME pool 210 is a local MME pool (local MME pool), and the MME pool 220 is a backup MME pool (redundancy MME pool or backup MME pool).

An MME pool not only undertakes work such as local mobility management, but may also be a backup MME pool of another MME pool. For example, the MME pool 220 not only undertakes mobility management work in its area, but also provides a backup for the MME pool 210; and for another example, the MME pool 210 not only undertakes mobility management work in its area, but may also provide a backup for another MME. To ensure that local services of each MME pool are not affect due to the backup provided for another MME pool, it is required that: when an MME pool can work normally, signaling under the MME pool is not expected to flow to another backup MME pool, and the signaling under the MME pool flows to the backup MME pool only when the local MME pool is faulty.

It can be seen that in the prior art, the eNB does not distinguish between a local MME pool and a backup MME pool, and it is possible that an MME in the backup MME pool is selected for locally accessing UE in a case that the local MME pool includes an available MME, which leads to failure of meeting the foregoing requirements.

In this application, priorities with different levels can be configured for the MMEs in the local MME pool and the backup MME pool, which can enable the eNB to distinguish between the local MME pool and the backup MME pool according to the priorities, and therefore, select an MME for the UE in the local MME pool first. As a result, the signaling under the local MME pool does not flow to another backup MME pool to occupy resources of the backup MME pool when the local MME pool can work normally.

It can be seen that, in the scenario that a backup MME pool exists, the foregoing method enables the base station to distinguish between the local MME pool and the backup MME pool according to the priority information, and therefore, an MME in the backup MME pool is not selected for the locally accessing UE when an available MME exists in the local MME pool. As a result, the signaling does not flow to the backup MME pool to occupy resources of the backup MME pool when an available MME exists in the local MME pool.

In this case, when an MME priority is configured, the priority of the local MME pool is set higher than that of the backup MME pool. In an implementation manner, the priorities of MMEs in the local MME pool may be all set higher than those in the backup MME pool. A selection policy of the base station may also be configured so that the base station regards the priority of a highest-priority MME in an MME pool as the priority of the MME pool, and then, when selecting an MME, the base station selects a highest-priority MME pool first and then selects a highest-priority MME in the selected MME pool. Therefore, so long as the priority of the highest-priority MME in the local MME pool is set higher than the priority of the highest-priority MME in the backup MME pool, it can be accomplished that the base station will not select an MME in the backup MME pool for the locally accessing UE in a case that an available MME exists in the local MME pool. As a result, the signaling will not flow to the backup MME pool to occupy resources of the backup MME pool when an available MME exists in the local MME pool.

It should be noted that an MME pool can work normally means that an available MME exists in the MME pool; and that the MME pool cannot work normally refers to failure of selecting an available MME in the MME pool, where the failure of selecting an available MME may be caused by an MME fault or an S1 link fault or MME overload, and so on.

In addition, a geographic location of the backup MME pool is generally separated from that of the local MME pool, and is a specific distance apart. In this case, the backup MME pool may also be called a remote MME pool (remote MME pool).

In addition, the local MME pool and the backup MME pool are termed relative to UE. For UEs in the coverage areas of different MME pools, their local MME pools and backup MME pools are different. For example, in FIG. 2, for UE under the eNB 230, the local MME pool is the MME pool 210, and the backup MME pool is the MME pool 220; for UE under the eNB 240, the local MME pool is the MME pool 220, and, if the MME pool 210 and the MME pool 220 provide a backup for each other, the backup MME pool for the UE under the eNB 240 is the MME pool 210.

Moreover, an MME pool may include only one MME. For example, the MME pools in FIG. 2 are changed to MMEs, where the two MMEs may provide a backup for each other, or either of the MMEs provide a backup for the other MME.

The following describes specific implementation of the foregoing method in detail with reference to another embodiment of the present invention in a scenario that the base station is connected to the local MME pool and the backup MME pool simultaneously. In this embodiment, the base station is connected to at least two MME pools, and one of the MME pools provides a backup for another MME pool. That is, multiple MMEs connected to the base station include MMEs in a first MME pool and MMEs in a second MME pool, where the second MME pool provides a backup for the first MME pool, a priority of a highest-priority MME in the first MME pool is a first priority, a priority of a highest-priority MME in the second MME pool is a second priority, and the first priority is different from the second priority.

In this way, when selecting an MME, the base station distinguishes between the first MME pool and the second MME pool according to the priorities of the highest-priority MMEs in the MME pools, that is, the first priority and the second priority, and therefore, the base station selects an MME in either of the MME pools first, and, in a case that the MME pool is available, does not occupy resources of the other MME pool.

Specifically, it is assumed that the first priority is higher than the second priority, and an MME is selected first from an MME pool (for example, the first MME pool) that includes a higher-priority MME, and an MME is selected from another MME pool (for example, the second MME pool) only when the MME pool is unavailable. Certainly, it is also assumed that the first priority is lower than the second priority, and an MME is selected first from an MME pool that includes a lower-priority MME, which is not limited in this application.

The following assumes that the first priority is higher than the second priority. In the foregoing step S130, when selecting an MME, the base station may comply with the following principles:
1) selecting an MME for the UE from a highest-priority MME pool first, where a priority of each MME pool is a priority level of a highest-priority MME in the MME pool; and
2) selecting an MME from a second-highest-priority MME pool when no MME is available in the highest-priority MME pool.
   It can be seen that, according to the principles 1) and 2), the base station may select an MME in the local MME pool first rather than select an MME in the backup MME pool for the locally accessing UE when an available MME exists in the local MME pool. As a result, signaling does not flow to the backup MME pool to occupy resources of the backup MME pool when an available MME exists in the local MME pool.
   Optionally, priorities of MMEs in each MME pool may be further set. During MME selection, a higher-priority MME is selected first. In this case, in the foregoing step S130, when selecting an MME, the base station may further comply with the following principle:
3) selecting the highest-priority MME first in the MME pool.
   In this way, different priorities can be configured for the MMEs in the pool, so as to further provide flexibility of network management. For example, in network planning, UE under a specific base station in an MME pool is expected to access a specific MME in the MME pool first, and then, a highest priority can be configured for the MME. Then, when the base station selects an MME for the UE, the base station selects the specific MME first so long as the specific MME is available.
   Optionally, the policy of selecting an MME according to the priority may be further combined with an existing MME selection policy. For example, when multiple MMEs have a same priority, an MME may be selected according to the existing MME selection policy, that is, the MME is selected for the UE according to capacities and loads of the MMEs. In practical applications, multiple MMEs may have an equal position under a same requirement, and therefore, a same priority may be configured for the MMEs. Then, an MME may be selected according to the capacity and the load with reference to the prior art at the time of selecting the MME. In this case, in the foregoing step S130, when selecting an MME, the base station may further comply with the following principle:
4) selecting an MME for the UE from the multiple MMEs having the same priority according to the capacities and the loads of the MMEs.

When selecting an MME according to one or more of the foregoing policies, the base station may apply different implementation manners. The following describes two implementation manners in detail with reference to accompanying drawings, which, however, are merely examples and are not intended to limit this application.

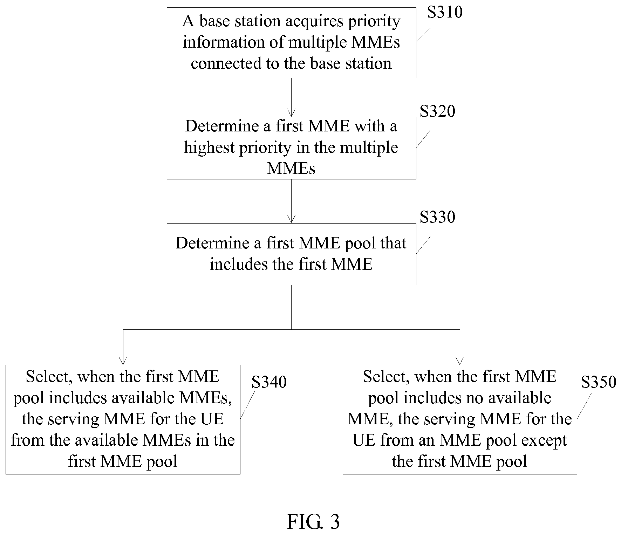

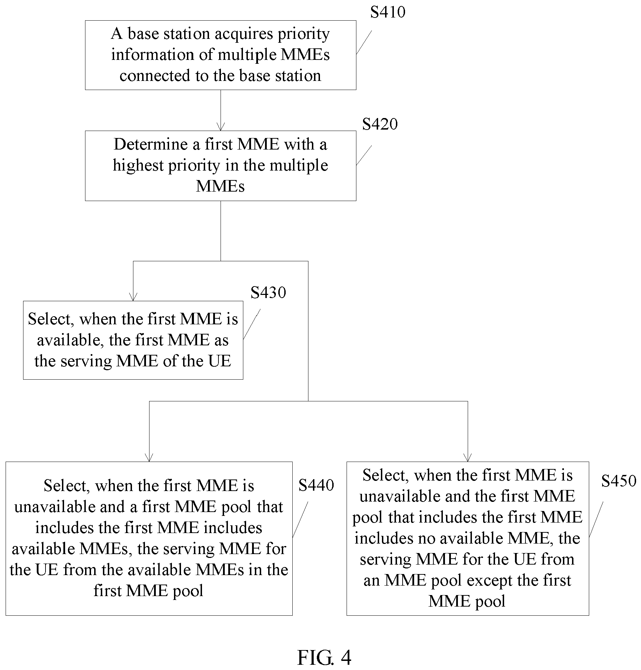

See FIG. 3. FIG. 3 is a schematic flowchart of another embodiment of the present invention. As shown in FIG. 3, the method includes the following steps:
S310. A base station acquires priority information of multiple MMEs connected to the base station;
S320. Determine a first MME with a highest priority in the multiple MMEs;
S330. Determine a first MME pool that includes the first MME;
S340. Select, when the first MME pool includes available MMEs, a serving MME for the UE from the available MMEs in the first MME pool; or
S350. Select, when the first MME pool includes no available MME, the serving MME for the UE from an MME pool (for example, an MME pool that provides a backup for the first MME pool) except the first MME pool.
   See FIG. 4. FIG. 4 is a schematic flowchart of still another embodiment of the present invention. As shown in FIG. 4, the method includes the following steps:
S410. A base station acquires priority information of multiple MMEs connected to the base station;
S420. Determine a first MME with a highest priority in the multiple MMEs;
S430. Select, when the first MME is available, the first MME as a serving MME of the UE;
S440. Select, when the first MME is unavailable and a first MME pool that includes the first MME includes available MMEs, the serving MME for the UE from the available MMEs in the first MME pool;
S450. Select, when the first MME is unavailable and the first MME pool that includes the first MME includes no available MME, the serving MME for the UE from an MME pool (for example, an MME pool that provides a backup for the first MME pool) except the first MME pool.

In the foregoing embodiments, in steps S340 and S440, selection may be performed according to the principle 3), that is, a highest-priority MME is selected as the serving MME of the UE from the available MMEs in the first MME pool. The selection may also be performed according to an existing selection manner, that is, the serving MME of the UE is selected according to capacities and loads of the available MMEs in the first MME pool. Certainly, the two manners may be combined. For example, when multiple highest-priority MMEs exist, the serving MME of the UE is selected according to the capacities and loads of the multiple highest-priority MMEs.

Likewise, in the foregoing steps S350 and S450, selection may be performed according to the principle 3), that is, an available MME with the highest priority is selected as the serving MME of the UE from an MME pool except the first MME pool. The selection may also be performed according to an existing selection manner, that is, the serving MME of the UE is selected according to capacities and loads of the available MMEs in the MME pool except the first MME pool. Certainly, the two manners may be combined. For example, when multiple highest-priority MMEs exist, the serving MME of the UE is selected according to the capacities and loads of the multiple highest-priority MMEs.

In the foregoing embodiments, the priority information of the MME may be configured for the base station by using a network management device; or may be pre-configured on each MME as a piece of attribute information of the MME. When the base station interacts with the MME, the information is sent to the base station, and the interaction process may be an interaction process of setting up a connection to the MME when the base station is powered on, or an interaction process initiated after the base station receives an RRC connection request sent by the UE, which is not limited in the embodiments of the present invention.

Specifically, in an embodiment of the present invention, the priority information of the multiple MMEs is configured by the network management device for the base station, and therefore, the acquiring, by the base station, the priority information of the multiple MMEs connected to the base station, includes: acquiring, by the base station, the priority information of the multiple MMEs from a local directory. In addition, the priority information of the multiple MMEs may be configured by the network management device, but is not delivered to the base station, and the base station acquires the priority information from the network management device when necessary.

It should be noted that network management devices include but are not limited to an operation, administration and maintenance (operation, administration and maintenance, OAM) system, an element management system (element management system, EMS), and an integration reference point manager (Integration Reference Point Manager, IRPManager) or an integration reference point agent (Integration Reference Point Agent, IRPAgent).

In another embodiment of the present invention, the priority information of the multiple MMEs is preset on a corresponding MME side separately, and the base station acquires the priority information of the multiple MMEs by interacting with the multiple MMEs and stores the priority information in a local directory. When an MME needs to be selected (for example, when receiving an RRC connection request of the UE), the base station acquires from the local directory the priority information of the multiple MMEs connected to the base station. Certainly, when an MME needs to be selected, the base station may interact with the multiple MMEs to acquire the priority information of the multiple MMEs.

For example, the interaction process may be as follows: after being powered on, the base station sends a setup request (set up request) message to the MME, and, when the MME responds to the setup request message, the response carries the priority information of the MME; or, when updating configuration, the MME uses MME configuration update (MME configuration update) message to carry the priority information of the MME. In summary, the embodiments of the present invention do not limit the interaction manner used by the base station to acquire the priority information from the MME side, and the interaction manner may be an existing interaction process or a newly added interaction process.

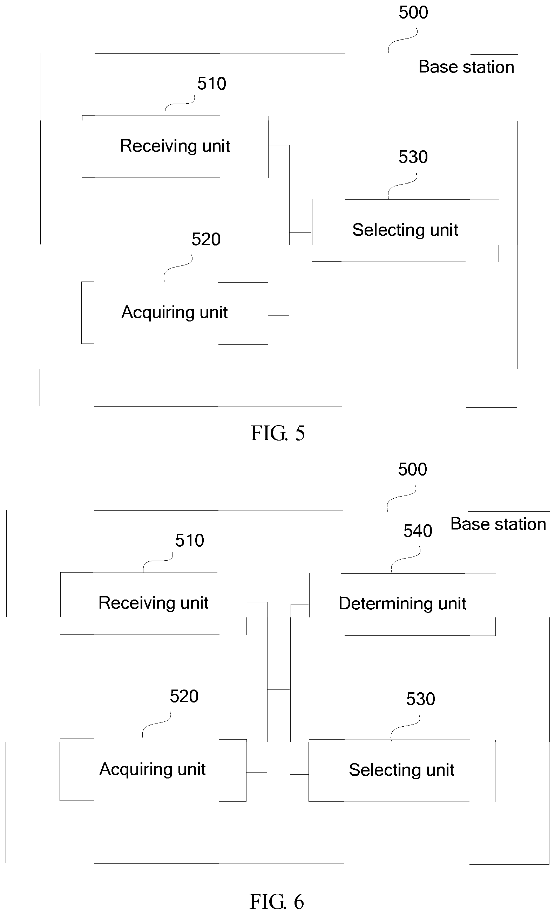

See also FIG. 5. FIG. 5 is a schematic structural diagram of a base station according to an embodiment of the present invention. The base station is configured to implement any one method provided in the foregoing embodiments. As shown in FIG. 5, the base station 500 includes a receiving unit 510, an acquiring unit 520, and a selecting unit 530. The receiving unit 510 is configured to receive an RRC connection request of UE; the acquiring unit 520 is configured to acquire priority information of multiple MMEs connected to the base station 500; and the selecting unit 530 is configured to select a serving MME for the UE from the multiple MMEs according to the priority information acquired by the acquiring unit 520.

Same as what is described in the foregoing method embodiments, the multiple MMEs include MMEs in a first MME pool and MMEs in a second MME pool, where the second MME pool provides a backup for the first MME pool, a priority of a highest-priority MME in the first MME pool is a first priority, a priority of a highest-priority MME in the second MME pool is a second priority, and the first priority is different from the second priority. Optionally, the first priority may be higher than the second priority.

In this case, the selecting unit 530 may comply with the foregoing principles 1) and 2) to select a serving MME for the UE. Certainly, the selecting unit may further comply with the foregoing principles 3) and 4), where the implementation and the effects are the same as those of the foregoing method embodiments and are not repeated here any further.

See also FIG. 6. FIG. 6 is a schematic structural diagram of another base station according to an embodiment of the present invention. The base station is configured to implement any one method provided in the embodiment shown in FIG. 3 or FIG. 4. The base station not only includes the units shown in FIG. 5, but also includes a determining unit 540. The determining unit 540 is configured to determine a first MME with a highest priority in the multiple MMEs connected to the base station, and determine a first MME pool that includes the first MME. The selecting unit 530 is configured to implement step 340 or 350 shown in FIG. 3, or implement step S430, S440, or S450 shown in FIG. 4.

In addition, same as what is described in the foregoing method embodiments, no matter whether the selecting unit 530 selects an MME from the first MME pool or selects a serving MME from an MME pool (for example, an MME pool that provides a backup for the first MME pool) except the first MME pool, the selecting unit may comply with the principle 3) or use an existing selection manner to perform the selection, or combine both of them, which is the same as what is described in the foregoing method embodiments and is not repeated here any further.

It should be noted that the selecting unit 530 may be set as hardware independent of a processor of the base station, and may be set in a form of a microprocessor; or may be embedded as hardware in a processor of the base station, or may be stored as software in a memory of the base station so that the corresponding processor of the base station invokes the software to implement corresponding operations of the selecting unit 530. The implementation manners of the acquiring unit 520 and the determining unit 540 are similar to that of the selecting unit 530 and are not repeated here any further. The receiving unit 510 may be an interface circuit such as an air interface circuit of the base station. The processor may be a central processing unit (CPU), a microprocessor, a single-chip microcomputer, and so on.

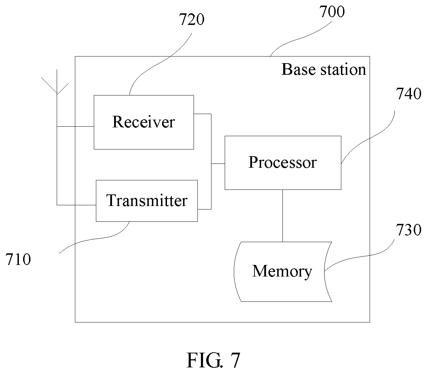

See FIG. 7. FIG. 7 is a schematic structural diagram of still another base station according to an embodiment of the present invention. As shown in FIG. 7, the base station 700 includes a transmitter 710, a receiver 720, a memory 730, and a processor 740 connected to the transmitter 710, the receiver 720, and the memory 730 separately. Certainly, the base station may further include universal components such as an antenna, a baseband processing component, an intermediate radio frequency processing component, and an input/output apparatus, which are not hereby limited in the embodiment of the present invention.

The memory stores a set of program codes and the processor 740 is configured to invoke the program codes stored in the memory 730 to implement an MME selection operation described in any one of the foregoing method embodiments. For example, when the receiver 720 receives an RRC connection request of UE, the processor 740 invokes the program codes to implement the following operations:
acquiring priority information of multiple MMEs connected to the base station; and
selecting a serving MME for the UE from the multiple MMEs according to the acquired priority information.

According to descriptions about the foregoing embodiments, persons skilled in the art can clearly understand that the present invention may be implemented by hardware or firmware or a combination thereof. When the present invention is implemented by software, the functions may be stored in a computer-readable medium or may be transmitted as one or more instructions or codes on the computer-readable medium. The computer-readable medium includes a computer storage medium and a communications medium, where the communications medium includes any medium that facilitates transfer of computer programs from one place to another. The storage medium may be any available medium that is accessible by a computer. Examples of the computer-readable medium include but are not limited to: a RAM, a ROM, an EEPROM, a CD-ROM, or other optical disk storage mediums or disk storage mediums or other magnetic storage devices, or any other computer-accessible mediums that can be used to carry or store expected program codes that are in an instruction form or in a data structure form. In addition, any connection may appropriately become a computer-readable medium. For example, if software is transmitted from a website, a server or another remote source by using a coaxial cable, an optical cable, a twisted pair, or a digital subscriber line (DSL), or by using a radio technology such as infrared transmission, radio transmission and microwave transmission, then the coaxial cable, or optical cable, or twisted pair, or DSL, or the radio technology such as infrared transmission, radio transmission and microwave transmission, is included in a fixation of the medium. As used in the present invention, disks (Disk) and discs (disc) include a compact disc (CD), a laser disc, an optical disk, digital versatile disk (DVD), a floppy disk, and a Blu-ray disc. Generally, the disk reproduces data magnetically, and the disc reproduces data optically by using laser. Combinations of them shall also be covered in the protection scope of the computer-readable medium.

## Claims

1. A method for selecting a mobility management entity, MME, comprising:
receiving (S110), by a base station, a radio resource control, RRC, connection request of user equipment;
acquiring (S120), by the base station, priority information of multiple MMEs connected to the base station; and
selecting (S130), by the base station, a serving MME for the user equipment from the multiple MMEs according to the acquired priority information when the RRC connection request does not carry MME information, or, when the RRC connection request carries MME information and an MME indicated by the MME information cannot be selected for the user equipment due to overload of the MME or a fault of an S1 link, wherein the method is **characterized in that**:
the base station is connected to a local MME pool and a backup MME pool, the backup MME pool provides a backup for the local MME pool, and the multiple MMEs comprise MMEs in the local MME pool and MMEs in the backup MME pool;
a priority of a highest-priority MME in the local MME pool is higher than a priority of a highest-priority MME in the backup MME pool; or priorities of the MMEs in the local MME pool are all higher than priorities of the MMEs in the backup MME pool; so that
the base station selects the serving MME for the user equipment in the local MME pool first when an available MME exists in the local MME pool.

2. The method according to claim 1, wherein the selecting (S130), by the base station, a serving MME for the user equipment from the multiple MMEs according to the acquired priority information, complies with the following principles:
selecting an MME for the user equipment from a highest-priority MME pool first, wherein a priority of each MME pool is a priority of a highest-priority MME in the MME pool; and
selecting, when no MME is available in the highest-priority MME pool, an MME from a second-highest-priority MME pool.

3. The method according to claim 2, wherein the selecting (S130), by the base station, a serving MME for the user equipment from the multiple MMEs according to the acquired priority information, further complies with the following principle:
selecting a highest-priority MME first in an MME pool.

4. The method according to claim 2 or 3, wherein the selecting (S130), by the base station, a serving MME for the user equipment from the multiple MMEs according to the acquired priority information, further complies with the following principle:
selecting, when multiple MMEs have a same priority, an MME for the user equipment from the multiple MMEs having the same priority according to capacities and loads of the MMEs.

5. The method according to any one of claims 1 to 4, wherein the selecting (S130), by the base station, a serving MME for the user equipment from the multiple MMEs according to the acquired priority information, comprises:
determining (S320), by the base station, a first MME with a highest priority in the multiple MMEs;
determining (S330), by the base station, a first MME pool that comprises the first MME, wherein the first MME pool is the local MME pool;
selecting (S340), by the base station when the first MME pool comprises available MMEs, the serving MME for the user equipment from the available MMEs in the first MME pool; or
selecting (S350), by the base station when the first MME pool comprises no available MME, the serving MME for the user equipment from an MME pool except the first MME pool.

6. The method according to any one of claims 1 to 4, wherein the selecting, by the base station, a serving MME for the user equipment from the multiple MMEs according to the acquired priority information, comprises:
determining (S420), by the base station, a first MME with a highest priority in the multiple MMEs;
selecting (S430), by the base station when the first MME is available, the first MME as the serving MME; or
selecting (S440), by the base station when the first MME is unavailable and a first MME pool that comprises the first MME comprises available MMEs, the serving MME for the user equipment from the available MMEs in the first MME pool; or
selecting (S450), by the base station when the first MME is unavailable and a first MME pool that comprises the first MME comprises no available MME, the serving MME for the user equipment from an MME pool except the first MME pool,
wherein the first MME pool is the local MME pool.

7. A base station, comprising:
a receiving unit (510), configured to receive a radio resource control, RRC, connection request of user equipment;
an acquiring unit (520), configured to acquire priority information of multiple MMEs connected to the base station; and
a selecting unit (530), configured to select a serving MME for the user equipment from the multiple MMEs according to the priority information acquired by the acquiring unit (520) when the RRC connection request does not carry MME information, or, when the RRC connection request carries MME information and an MME indicated by the MME information cannot be selected for the user equipment due to overload of the MME or a fault of an S1 link, wherein the base station is **characterized in that**:
the base station is connected to a local MME pool and a backup MME pool, the backup MME pool provides a backup for the local MME pool, and the multiple MMEs comprise MMEs in the local MME pool and MMEs in the backup MME pool;
a priority of a highest-priority MME in the local MME pool is higher than a priority of a highest-priority MME in the backup MME pool; or priorities of the MMEs in the local MME pool are all higher than priorities of the MMEs in the backup MME pool; so that
the selecting unit (530) is configured to select the serving MME for the user equipment in the local MME pool first when an available MME exists in the local MME pool.

8. The base station according to claim 7, wherein when selecting the serving MME for the user equipment from the multiple MMEs according to the acquired priority information, the selecting unit (530) complies with the following principles:
selecting an MME for the user equipment from a highest-priority MME pool first, wherein a priority of each MME pool is a priority of a highest-priority MME in the MME pool; and
selecting, when no MME is available in the highest-priority MME pool, an MME from a second-highest-priority MME pool.

9. The base station according to claim 8, wherein when selecting the serving MME for the user equipment from the multiple MMEs according to the acquired priority information, the selecting unit (530) further complies with the following principle:
selecting a highest-priority MME first in an MME pool.

10. The base station according to claim 8 or 9, wherein when selecting the serving MME for the user equipment from the multiple MMEs according to the acquired priority information, the selecting unit (530) further complies with the following principle:
selecting, when multiple MMEs have a same priority, an MME for the user equipment from the multiple MMEs having the same priority according to capacities and loads of the MMEs.

11. The base station according to any one of claims 7 to 10, wherein the base station further comprises:
a determining unit (540), configured to determine a first MME with a highest priority in the multiple MMEs, and determine a first MME pool that comprises the first MME, wherein the first MME pool is the local MME pool, and
the selecting unit (530) is configured to select, when the first MME pool comprises available MMEs, the serving MME for the user equipment from the available MMEs in the first MME pool; or select, when the first MME pool comprises no available MME, the serving MME for the user equipment from an MME pool except the first MME pool.

12. The base station according to any one of claims 7 to 10, further comprising:
a determining unit (540), configured to determine a first MME with a highest priority in the multiple MMEs, wherein
the selecting unit (530) is configured to: select, when the first MME is available, the first MME as the serving MME; or select, when the first MME is unavailable and a first MME pool that comprises the first MME comprises available MMEs, the serving MME for the user equipment from the available MMEs in the first MME pool; or select, when the first MME is unavailable and a first MME pool that comprises the first MME comprises no available MME, the serving MME for the user equipment from an MME pool except the first MME pool, wherein the first MME pool is the local MME pool.

13. A computer program product, comprising a computer-readable medium, wherein the computer-readable medium comprises a set of program codes used to implement a method specified in any one of claims 1 to 6.

## Patentansprüche

1. Verfahren zum Auswählen einer Mobilitätsverwaltungseinheit MME (Mobility Management Entity), umfassend:
Empfangen (S110) durch eine Basisstation einer Verbindungsanforderung zur Funkressourcensteuerung RRC (Radio Resource Control) einer Benutzereinrichtung;
Erfassen (S120) durch die Basisstation von Prioritätsinformationen vielfacher, mit der Basisstation verbundener MMEs; und
Auswählen (S130) durch die Basisstation einer versorgenden MME für die Benutzereinrichtung unter den vielfachen MMEs gemäß den erfassten Prioritätsinformationen, wenn die RRC-Verbindungsanforderung keine MME-Informationen führt oder wenn die RRC-Verbindungsanforderung MME-Informationen führt und eine durch die MME-Informationen angezeigte MME aufgrund von Überlastung der MME oder eines Fehlers einer S1-Verbindung nicht ausgewählt werden kann, wobei das Verfahren **dadurch gekennzeichnet ist, dass**:
die Basisstation mit einem örtlichen MME-Pool und einem Reserve-MME-Pool verbunden ist, der Reserve-MME-Pool eine Reserve für den örtlichen MME-Pool bereitstellt und die vielfachen MMEs MMEs im örtlichen MME-Pool und MMEs im Reserve-MME-Pool umfassen;
eine Priorität einer MME höchster Priorität im örtlichen MME-Pool höher als eine Priorität einer MME höchster Priorität in dem Reserve-MME-Pool ist; oder Prioritäten der MME im örtlichen MME-Pool alle höher als Prioritäten der MMEs im Reserve-MME-Pool sind; so dass die Basisstation die versorgende MME für die Benutzereinrichtung zuerst im örtlichen MME-Pool auswählt, wenn eine verfügbare MME im örtlichen MME-Pool besteht.

2. Verfahren nach Anspruch 1, wobei das Auswählen (S130) durch die Basisstation einer versorgenden MME für die Benutzereinrichtung aus den vielfachen MMEs gemäß den erfassten Prioritätsinformationen die folgenden Grundsätze einhält:
Auswählen einer MME für die Benutzereinrichtung aus einem MME-Pool höchster Priorität zuerst, wobei eine Priorität jedes MME-Pools eine Priorität einer MME höchster Priorität in dem MME-Pool ist; und
Auswählen, wenn keine MME in dem MME-Pool höchster Priorität verfügbar ist, einer MME aus einem MME-Pool zweithöchster Priorität.

3. Verfahren nach Anspruch 2, wobei das Auswählen (S130) durch die Basisstation einer versorgenden MME für die Benutzereinrichtung aus den vielfachen MMEs gemäß den erfassten Prioritätsinformationen weiterhin den folgenden Grundsatz einhält:
Auswählen einer MME höchster Priorität zuerst in einem MME-Pool.

4. Verfahren nach Anspruch 2 oder 3, wobei das Auswählen (S130) durch die Basisstation einer versorgenden MME für die Benutzereinrichtung aus den vielfachen MMEs gemäß den erfassten Prioritätsinformationen weiterhin den folgenden Grundsatz einhält:
Auswählen, wenn vielfache MMEs eine gleiche Priorität aufweisen, einer MME für die Benutzereinrichtung aus den vielfachen MMEs mit der gleichen Priorität gemäß den Kapazitäten und Belastungen der MMEs.

5. Verfahren nach einem beliebigen der Ansprüche 1 bis 4, wobei das Auswählen (S130) durch die Basisstation einer versorgenden MME für die Benutzereinrichtung aus den vielfachen MMEs gemäß den erfassten Prioritätsinformationen umfasst:
Bestimmen (S320) durch die Basisstation einer ersten MME mit einer höchsten Priorität in den vielfachen MMEs;
Bestimmen (S330) durch die Basisstation eines ersten MME-Pools, der die erste MME umfasst, wobei der erste MME-Pool der örtliche MME-Pool ist;
Auswählen (S340) durch die Basisstation, wenn der erste MME-Pool verfügbare MMEs umfasst, der versorgenden MME für die Benutzereinrichtung aus den verfügbare MMEs in dem ersten MME-Pool; oder
Auswählen (S350) durch die Basisstation, wenn der erste MME-Pool keine verfügbare MME umfasst, der versorgenden MME für die Benutzereinrichtung aus einem MME-Pool außer dem ersten MME-Pool.

6. Verfahren nach einem beliebigen der Ansprüche 1 bis 4, wobei das Auswählen durch die Basisstation einer versorgenden MME für die Benutzereinrichtung aus den vielfachen MMEs gemäß den erfassten Prioritätsinformationen umfasst:
Bestimmen (S420) durch die Basisstation einer ersten MME mit einer höchsten Priorität in den vielfachen MMEs;
Auswählen (S430) durch die Basisstation, wenn die erste MME verfügbar ist, der ersten MME als die versorgende MME; oder
Auswählen (S440) durch die Basisstation, wenn die erste MME nicht verfügbar ist und ein erster MME-Pool, der die erste MME umfasst, verfügbare MMEs umfasst, der versorgenden MME für die Benutzereinrichtung aus den verfügbaren MMEs im ersten MME-Pool; oder
Auswählen (S450) durch die Basisstation, wenn die erste MME nicht verfügbar ist und ein erster MME-Pool, der die erste MME umfasst, keine verfügbare MME umfasst, der versorgenden MME für die Benutzereinrichtung aus einem MME-Pool außer dem ersten MME-Pool,
wobei der erste MME-Pool der örtliche MME-Pool ist.

7. Basisstation, umfassend:
eine Empfangseinheit (510) eingerichtet zum Empfangen einer Verbindungsanforderung für Funkressourcensteuerung RRC (Radio Resource Control) der Benutzereinrichtung;
eine Erfassungseinheit (520) eingerichtet zum Erfassen von Prioritätsinformationen von mit der Basisstation verbundenen vielfachen MMEs; und
eine Auswähleinheit (530) eingerichtet zum Auswählen einer versorgenden MME für die Benutzereinrichtung aus den vielfachen MMEs gemäß den durch die Erfassungseinheit (520) erfassten Prioritätsinformationen, wenn die RRC-Verbindungsanforderung keine MME-Informationen führt oder wenn die RRC-Verbindungsanforderung MME-Informationen führt und eine durch die MME-Informationen angezeigte MME aufgrund Überlastung der MME oder eines Fehlers einer S1-Verbindung nicht für die Benutzereinrichtung ausgewählt werden kann, wobei die Basisstation **dadurch gekennzeichnet ist, dass**:
die Basisstation mit einem örtlichen MME-Pool und einem Reserve-MME-Pool verbunden ist, der Reserve-MME-Pool eine Reserve für den örtlichen MME-Pool bereitstellt und die vielfachen MME MMEs im örtlichen MME-Pool und MMEs im Reserve-MME-Pool umfassen;
eine Priorität einer MME höchster Priorität im örtlichen MME-Pool höher als eine Priorität einer MME höchster Priorität im Reserve-MME-Pool ist; oder Prioritäten der MMEs im örtlichen MME-Pool alle höher als Prioritäten der MME im Reserve-MME-Pool sind; so dass
die Auswähleinheit (530) eingerichtet ist zum Auswählen der versorgenden MME für die Benutzereinrichtung im örtlichen MME-Pool zuerst, wenn eine verfügbare MME im örtlichen MME-Pool besteht.

8. Basisstation nach Anspruch 7, wobei, beim Auswählen der versorgenden MME für die Benutzereinrichtung aus den vielfachen MMEs gemäß den erfassten Prioritätsinformationen die Auswähleinheit (530) die folgenden Grundsätze einhält:
Auswählen einer MME für die Benutzereinrichtung aus einem MME-Pool höchster Priorität zuerst, wobei eine Priorität jedes MME-Pools eine Priorität einer MME höchster Priorität im MME-Pool ist; und
Auswählen, wenn keine MME im MME-Pool höchster Priorität verfügbar ist, einer MME aus einem MME-Pool zweithöchster Priorität.

9. Basisstation nach Anspruch 8, wobei beim Auswählen der versorgenden MME für die Benutzereinrichtung aus den vielfachen MMEs gemäß den erfassten Prioritätsinformationen die Auswähleinheit (530) weiterhin den folgenden Grundsatz einhält:
Auswählen einer MME höchster Priorität zuerst in einem MME-Pool.

10. Basisstation nach Anspruch 8 oder 9, wobei beim Auswählen der versorgenden MME für die Benutzereinrichtung aus den vielfachen MMEs gemäß den erfassten Prioritätsinformationen die Auswähleinheit (530) weiterhin den folgenden Grundsatz einhält:
Auswählen, wenn vielfache MMEs eine gleiche Priorität aufweisen, einer MME für die Benutzereinrichtung aus den vielfachen MMEs mit der gleichen Priorität gemäß den Kapazitäten und Belastungen der MME.

11. Basisstation nach einem beliebigen der Ansprüche 7 bis 10, wobei die Basisstation weiterhin umfasst:
eine Bestimmungseinheit (540), eingerichtet zum Bestimmen einer ersten MME mit einer höchsten Priorität in den vielfachen MMEs und Bestimmen eines ersten MME-Pools, der die erste MME umfasst, wobei der erste MME-Pool der örtliche MME-Pool ist, und
die Auswähleinheit (530) eingerichtet ist zum Auswählen, wenn der erste MME-Pool verfügbare MMEs umfasst, der versorgenden MME für die Benutzereinrichtung aus den verfügbare MMEs im ersten MME-Pool; oder Auswählen, wenn der erste MME-Pool keine verfügbare MME umfasst, der versorgenden MME für die Benutzereinrichtung aus einem MME-Pool außer dem ersten MME-Pool.

12. Basisstation nach einem beliebigen der Ansprüche 7 bis 10, weiterhin umfassend:
eine Bestimmungseinheit (540), eingerichtet zum Bestimmen einer ersten MME mit einer höchsten Priorität in den vielfachen MMEs, wobei
die Auswähleinheit (530) eingerichtet ist zum: Auswählen, wenn die erste MME verfügbar ist, der ersten MME als die versorgende MME oder Auswählen, wenn die erste MME nicht verfügbar ist und ein erster MME-Pool, der die erste MME umfasst, verfügbare MMEs umfasst, der versorgenden MME für die Benutzereinrichtung aus den verfügbaren MME in dem ersten MME-Pool; oder Auswählen, wenn die erste MME nicht verfügbar ist und ein erster MME-Pool, der die erste MME umfasst, keine verfügbare MME umfasst, der versorgenden MME für die Benutzereinrichtung aus einem MME-Pool außer dem ersten MME-Pool, wobei der erste MME-Pool der örtliche MME-Pool ist.

13. Computerprogrammprodukt umfassend ein computerlesbares Medium, wobei das computerlesbare Medium einen zum Ausführen eines in einem beliebigen der Ansprüche 1 bis 6 angegebenen Verfahrens benutzten Satz von Programmcodes umfasst.

## Revendications

1. Procédé de sélection d'une entité de gestion de mobilité, MME, comprenant :
la réception (S 110), par une station de base, d'une requête de connexion de commande de ressources radio, RRC, d'un équipement utilisateur ;
l'acquisition (S 120), par la station de base, d'informations de priorité de multiples MME connectées à la station de base ; et
la sélection (S 130), par la station de base, d'une MME de desserte pour l'équipement utilisateur parmi les multiples MME en fonction des informations de priorité acquises quand la requête de connexion RRC ne comporte pas d'informations MME, ou, quand la requête de connexion RRC comporte des informations MME et qu'une MME indiquée par les informations MME ne peut pas être sélectionnée pour l'équipement utilisateur en raison d'une surcharge de la MME ou d'une défaillance d'une liaison S1, le procédé étant **caractérisé en ce que** :
la station de base est connectée à un groupe de MME local et un groupe de MME de secours, le groupe de MME de secours assure un secours du groupe de MME local, et les multiples MME comprennent des MME dans le groupe de MME local et des MME dans le groupe de MME de secours ;
une priorité d'une MME de la plus haute priorité dans le groupe de MME local est supérieure à une priorité d'une MME de la plus haute priorité dans le groupe de MME de secours ; ou des priorités des MME dans le groupe de MME local sont toutes supérieures aux priorités des MME dans le groupe de MME de secours ; de telle sorte que la station de base sélectionne la MME de desserte pour l'équipement utilisateur dans le groupe de MME local en premier quand une MME disponible existe dans le groupe de MME local.

2. Procédé selon la revendication 1, dans lequel la sélection (S130), par la station de base, d'une MME de desserte pour l'équipement utilisateur parmi les multiples MME en fonction des informations de priorité acquises, répond aux principes suivants :
la sélection d'une MME pour l'équipement utilisateur dans un groupe de MME de la plus haute priorité en premier, dans lequel une priorité de chaque groupe de MME est une priorité d'une MME de la plus haute priorité dans le groupe de MME ; et
la sélection, quand aucune MME n'est disponible dans le groupe de MME de la plus haute priorité, d'une MME parmi un groupe de MME de la deuxième plus haute priorité.

3. Procédé selon la revendication 2, dans lequel la sélection (S 130), par la station de base, d'une MME de desserte pour l'équipement utilisateur parmi les multiples MME en fonction des informations de priorité acquises, répond en outre au principe suivant :
la sélection d'une MME de la plus haute priorité en premier dans un groupe de MME.

4. Procédé selon la revendication 2 ou 3, dans lequel la sélection (S 130), par la station de base, d'une MME de desserte pour l'équipement utilisateur parmi les multiples MME en fonction des informations de priorité acquises, répond en outre au principe suivant :
la sélection, quand de multiples MME ont une même priorité, d'une MME pour l'équipement utilisateur parmi les multiples MME ayant la même priorité en fonction des capacités et charges des MME.

5. Procédé selon l'une quelconque des revendications 1 à 4, dans lequel la sélection (S130), par la station de base, d'une MME de desserte pour l'équipement utilisateur parmi les multiples MME en fonction des informations de priorité acquises, comprend :
la détermination (S320), par la station de base, d'une première MME ayant la plus haute priorité dans les multiples MME ;
la détermination (S330), par la station de base, d'un premier groupe de MME qui comprend la première MME, le premier groupe de MME étant le groupe de MME local ;
la sélection (S340), par la station de base quand le premier groupe de MME comprend des MME disponibles, de la MME de desserte pour l'équipement utilisateur parmi les MME disponibles dans le premier groupe de MME ; ou
la sélection (S350), par la station de base quand le premier groupe de MME ne comprend pas de MME disponible, de la MME de desserte pour l'équipement utilisateur parmi un groupe de MME autre que le premier groupe de MME.

6. Procédé selon la revendication 1 à 4, dans lequel la sélection, par la station de base, d'une MME de desserte pour l'équipement utilisateur parmi les multiples MME en fonction des informations de priorité acquises, comprend :
la détermination (S420), par la station de base, d'une première MME de la plus haute priorité dans les multiples MME ;
la sélection (S430), par la station de base quand la première MME est disponible, de la première MME comme MME de desserte ; ou
la sélection (S440), par la station de base quand la première MME n'est pas disponible et qu'un premier groupe de MME qui comprend la première MME comprend des MME disponibles, de la MME de desserte pour l'équipement utilisateur parmi les MME disponibles dans le premier groupe de MME ; ou la sélection (S450), par la station de base quand la première MME n'est pas disponible et qu'un premier groupe de MME qui comprend la première MME ne comprend pas de MME disponible, de la MME de desserte pour l'équipement utilisateur parmi un groupe de MME autre que le premier groupe de MME,
dans lequel le premier groupe de MME est le groupe de MME local.

7. Station de base, comprenant :
une unité de réception (510), configurée pour recevoir une requête de connexion de commande de ressources radio, RRC, d'un équipement utilisateur ;
une unité d'acquisition (520), configurée pour acquérir des informations de priorité de multiples MME connectées à la station de base ; et
une unité de sélection (530), configurée pour sélectionner une MME de desserte pour l'équipement utilisateur parmi les multiples MME en fonction des informations de priorité acquises par l'unité d'acquisition (520) quand la requête de connexion RRC ne comporte pas d'informations MME, ou, quand la requête de connexion RRC comporte des informations MME et qu'une MME indiquée par les informations MME ne peut pas être sélectionnée pour l'équipement utilisateur en raison d'une surcharge de la MME ou d'une défaillance d'une liaison S1, la station de base étant **caractérisée en ce que** :
la station de base est connectée à un groupe de MME local et un groupe de MME de secours, le groupe de MME de secours assure un secours du groupe de MME local, et les multiples MME comprennent des MME dans le groupe de MME local et des MME dans le groupe de MME de secours ;
une priorité d'une MME de la plus haute priorité dans le groupe de MME local est supérieure à une priorité d'une MME de la plus haute priorité dans le groupe de MME de secours ; ou des priorités des MME dans le groupe de MME local sont toutes supérieures aux priorités des MME dans le groupe de MME de secours ; de telle sorte que l'unité de sélection (530) soit configurée pour sélectionner la MME de desserte pour l'équipement utilisateur dans le groupe de MME local en premier quand une MME disponible existe dans le groupe de MME local.

8. Station de base selon la revendication 7, dans lequel lors de la sélection de la MME de desserte pour l'équipement utilisateur parmi les multiples MME en fonction des informations de priorité acquises, l'unité de sélection (530) répond aux principes suivants :
la sélection d'une MME pour l'équipement utilisateur dans un groupe de MME de la plus haute priorité en premier, dans laquelle une priorité de chaque groupe de MME est une priorité d'une MME de la plus haute priorité dans le groupe de MME ; et
la sélection, quand aucune MME n'est disponible dans le groupe de MME de la plus haute priorité, d'une MME parmi un groupe de MME de la deuxième plus haute priorité.

9. Station de base selon la revendication 8, dans laquelle lors de la sélection de la MME de desserte pour l'équipement utilisateur parmi les multiples MME en fonction des informations de priorité acquises, l'unité de sélection (530) répond en outre au principe suivant :
la sélection d'une MME de la plus haute priorité en premier dans un groupe de MME.

10. Station de base selon la revendication 8 ou 9, dans laquelle lors de la sélection de la MME de desserte pour l'équipement utilisateur parmi les multiples MME en fonction des informations de priorité acquises, l'unité de sélection (530) répond en outre au principe suivant :
la sélection, quand de multiples MME ont une même priorité, d'une MME pour l'équipement utilisateur parmi les multiples MME ayant la même priorité en fonction des capacités et charges des MME.

11. Station de base selon l'une quelconque des revendications 7 à 10, dans laquelle la station de base comprend en outre :
une unité de détermination (540), configurée pour déterminer une première MME ayant la plus haute priorité dans les multiples MME, et déterminer un premier groupe de MME qui comprend la première MME, le premier groupe de MME étant le groupe de MME local, et
l'unité de sélection (530) est configurée pour sélectionner, quand le premier groupe de MME comprend des MME disponibles, la MME de desserte pour l'équipement utilisateur parmi les MME disponibles dans le premier groupe de MME ; ou sélectionner, quand le premier groupe de MME ne comprend pas de MME disponible, la MME de desserte pour l'équipement utilisateur parmi un groupe de MME autre que le premier groupe de MME.

12. Station de base selon l'une quelconque des revendications 7 à 10, comprenant en outre :
une unité de détermination (540), configurée pour déterminer une première MME de la plus haute priorité dans les multiples MME, dans laquelle
l'unité de sélection (530) est configurée pour sélectionner quand la première MME est disponible, la première MME comme MME de desserte ; ou sélectionner, quand la première MME n'est pas disponible et qu'un premier groupe de MME qui comprend la première MME comprend des MME disponibles, la MME de desserte pour l'équipement utilisateur parmi les MME disponibles dans le premier groupe de MME ; ou sélectionner, quand la première MME n'est pas disponible et qu'un premier groupe de MME qui comprend la première MME ne comprend pas de MME disponible, la MME de desserte pour l'équipement utilisateur parmi un groupe de MME autre que le premier groupe de MME, dans lequel le premier groupe de MME est le groupe de MME local.

13. Produit de programme informatique, comprenant un support lisible par ordinateur, dans lequel le support lisible par ordinateur comprend un ensemble de codes de programme servant à mettre en oeuvre le procédé selon l'une quelconque des revendications 1 à 6.
